# EUROPEAN PATENT SPECIFICATION

(11) **EP 2 047 820 B1**
(45) Date of publication and mention of the grant of the patent: **19.03.2014**
(21) Application number: 07742725.0
(22) Date of filing: 01.05.2007
(51) Int. Cl.: A61C 7/12, A61C 7/14, A61C 7/28

(54) **BRACKET FOR ORTHODONTIC**
KIEFERORTHOPÄDISCHE SPANGE
BRIDE DE FIXATION ORTHODONTIQUE

(30) Priority: 02.05.2006 JP 2006128401
(43) Date of publication of application: 15.04.2009
(73) Proprietor: Suyama, Hajime, Miyazaki-shi Miyazaki 880-0023 (JP)
(72) Inventor: Suyama, Hajime, Miyazaki-shi Miyazaki 880-0023 (JP)
(74) Representative: Lippert, Stachow & Partner
(86) International application number: PCT/JP2007/059290
(87) International publication number: WO 2007/129630

(56) References cited:
- EP-A2- 0 404 447
- JP-A- 06 105 854
- JP-B2- 05 055 142
- JP-U- H0 563 517
- JP-Y2- 06 033 927

## Description

### Technical field

The present invention relates to a bracket used in orthodontic treatment.

### Background technology

In general, in the first half of orthodontic treatment, because it is necessary to slide an orthodontic bracket along a main wire in order to move teeth, it is better if the resistance between the main wire and the orthodontic bracket is small. On the other hand, in the second half of treatment, because the aligned teeth must be fixed, it is desirable to have large resistance between the main wire and the orthodontic bracket.

Conventional orthodontic brackets comprise a slot for fitting and joining the arch wire or other main wire and a tie wing for catching a ligature wire (or a rubber ring) which fastens and fixes the main wire. In the early stages of treatment (crowded dentition), teeth are moved by the main wire, which is thinner than the width of the slot, using a coil spring and rubber. As the treatment progresses, the main wire is replaced with a thicker one to increase the resistance between the main wire and the orthodontic bracket.

However, these brackets cannot achieve precise control because, in the early stages of treatment, the thin main wire inevitably results in too much play in the slot. In addition, the replacement of the main wire that takes place as treatment progresses causes inconvenience that both the treatment provider (dentist) and the treatment receiver (patient) find complicated and troublesome.

Thus, the present inventor has proposed an orthodontic bracket wherein both ends of a tie wing that are orthogonal to a slot are left with sufficient width for running a ligature wire therealong, engagement claws are provided on both sides of the tie wing that are parallel to the slot, and a widthwise portion just sufficient for running a ligature wire therealong is removed from both ends of the engagement claws (refer to claim 1). In

addition, when the ligature wire is used to prevent the arch wire from becoming dislocated, the use of this orthodontic bracket enables the ligature wire to twist around the bracket without pressing against the arch wire. When teeth are moved mesiodistally, the brackets adhered and fixed to individual teeth can smoothly slide on the arch wire and therefore, the friction between the slot and the arch wire can be reduced and the period of orthodontic treatment can be shortened.

However, in the above-mentioned configuration wherein engagement claws are provided on both sides of a tie wing, the production process is complicated, the costs pile up, and moreover, it is difficult to make a bracket of a material other than metals, for example, a brittle material such as ceramic.

JP H05 63517 U discloses an orthodontic bracket, comprising a base plate and thereof wings provided a long both sides of the base plate and disposed so as to form arch wire fitting slot therebetween, wherein the tie wings have wing pieces which project outwardly from the wings with their distal ends slanting downwardly and can engage with a fixture of the arch wire in a cross-stich-type manner.

Therefore, in light of the aforementioned problems of the prior art, the object of the present invention is, of course, to provide an orthodontic bracket which achieves effects similar to those of the prior art, as well to provide an orthodontic bracket for which the resistance between the bracket and the main wire can be easily changed depending on treatment stage, and which can be made easily and inexpensively from a brittle material such as ceramic while ensuring sufficient strength.

### Disclosure of the invention

For achieving the above-indicated object, an orthodontic bracket of the above-identified type disclosed by JP -H05 63 517U is characterized in that the wing pieces (5, 6) of each tie wing (2) are constituted by a long wing piece (5) and a short wing piece (6), the long wing pieces (5) of the two tie wings (2) being arranged diagonally to the tie wings (2), and a recessed guide groove (5a) is provided at a portion of each tie wing (2) in the vicinity of the long wing piece (5) at the lateral end of said tie wing (2) for receiving the fixture (7).

### Brief Description of the Drawings

[Fig. 1] An oblique perspective drawing showing an example of an orthodontic bracket according to the present invention.
[Fig. 2] A plan view showing an orthodontic bracket in Fig. 1.

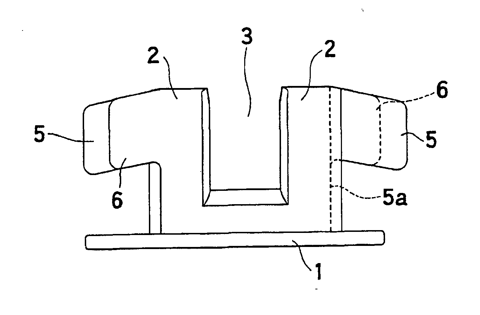

[Fig. 3] A side view showing an orthodontic bracket in Fig. 1.
[Fig. 4] A plan view showing the first method for fitting a ligature wire.
[Fig. 5] A side view showing the first method for fitting a ligature wire.
[Fig. 6] A plan view showing the second method for fitting a ligature wire.
[Fig. 7] A side view showing the second method for fitting a ligature wire.

### Best Mode for Carrying Out the Invention

An embodiment of the present invention will be explained based on the examples shown in the drawings.

### Embodiments

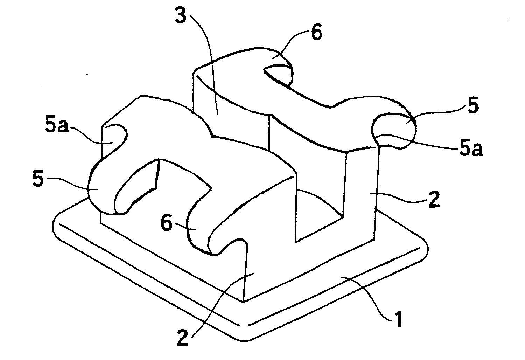

An orthodontic bracket according to the present invention is integrally made of stainless steel, a synthetic resin, ceramic or the like and comprises primarily a base plate (1), a tie wing (2) and an arch wire fitting slot (3). More specifically, as shown in Fig. 1, the orthodontic bracket is configured such that a pair of tie wings (2) having a pair of long and short wing pieces, that is, a long wing piece (5) and a short wing piece (6), are erected on the rectangular base plate (1) spaced apart from each other, and the arch wire fitting slot (3) is formed by this spaced apart portion.

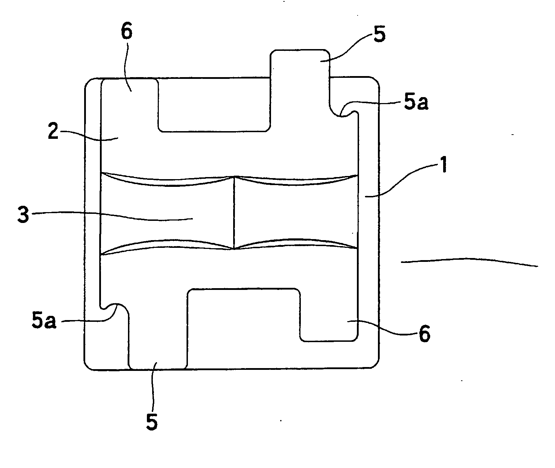

The pair of wing pieces (5, 6) of the tie wing (2) are provided so as to project in the vertical direction, with the distal ends slanting downwardly, and, as shown in Fig. 2, are constituted by the long wing piece (5) and the short wing piece (6). A recessed guide groove (5a) is provided at the tie wing (2) portion in the vicinity of the end of one wing piece (long wing piece) (5).

When orthodontic treatment is carried out using the orthodontic bracket according to the present invention, it is carried out in the following manner.

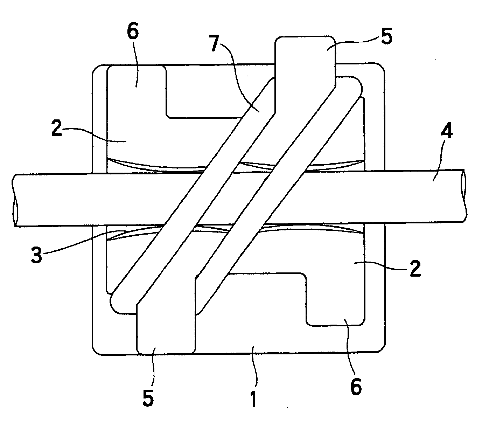

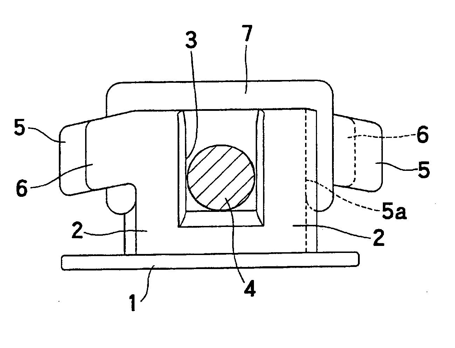

In the first half of treatment, during which it is necessary to move teeth, in a state where the orthodontic bracket is bonded to a tooth via the base plate (1), an arch wire (main wire) (4) having substantially the same diameter as the width of the arch wire fitting slot (3) of the orthodontic bracket is fitted to the slot (3). Then, as shown in Fig. 4 and Fig. 5, a ligature wire (fixture) (7) is placed on the orthodontic bracket by being hitched to the wing pieces (long wing pieces) (5) of the tie wings (2) via the guide grooves (5a) in such a manner that the ligature wire (7) is diagonal to the tie wings (2), in other words, in a cross-stitch-type manner. Thus, as shown in Fig. 5, because the ligature wire (7) does not directly contact the arch wire (4), the orthodontic bracket can slide along the arch wire (4) without resistance. In this case, because the arch wire (4) has substantially the same diameter as the width of the slot (3) and there is little play in the slot (3), precise control can be achieved. In addition, as shown in Fig. 5, the ligature wire (7) is fitted so as to cover the opening of the slot (3) and therefore, the arch wire (4) does not come free from the slot (3).

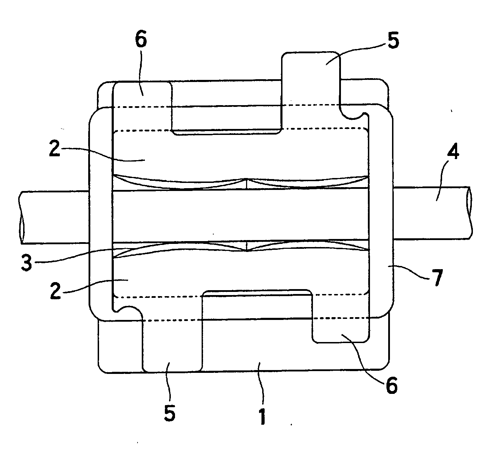

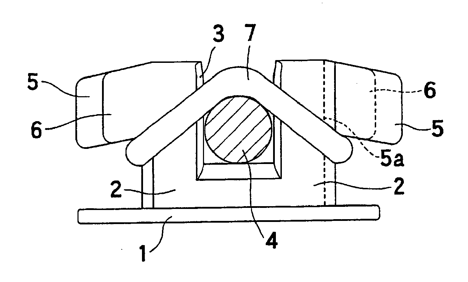

In the second half of treatment, in which it is necessary to fix the aligned teeth in place, the aforementioned ligature wire (7) is detached and then, as shown in Fig. 6 and Fig. 7, another ligature wire (7) is placed on the orthodontic bracket by being hitched to the tie wings (2) via all the pair of wing pieces (5, 6) of the tie wings (2) in such a manner that the ligature wire (7) forms a rectangle. Thus, as shown in Fig. 7, the ligature wire (7) strongly fixes the arch wire in place (4) by pressing it against the base plate (12) of the orthodontic bracket; this is effective in cases where some teeth are pulled into place while other teeth are being fixed in place. In this case, because the afore-mentioned arch wire (4) can be effectively used as is, it is not necessary to replace the arch wire (4).

As discussed above, simply by switching between the two methods for fitting the ligature wire (7), the resistance between the arch wire (4) and the bracket can easily take two levels and the complications that arise by the time the treatment is completed can be reduced significantly.

In addition, in the above embodiment, an explanation was made of the case where the ligature wire (7) is used as a fixture to fix the arch wire (4) to the tie wings (2), but it goes without saying that the orthodontic treatment can also be provided using a rubber ring in place of the ligature wire (7).

### [Industrial Applicability]

The present invention achieves the following advantageous effects.
(1) By switching between two methods for fitting a fixing wire that use a guide groove and the wing pieces of a tie wing, the resistance between arch wire and bracket can easily take two levels, depending on treatment stage. Therefore, the complications that arise by the time the treatment is completed can be reduced significantly compared to conventional orthodontic treatment and the treatment-related burdens on both the treatment provider (dentist) and the treatment receiver (patient) are reduced.
(2) Because it is not necessary to make the wings thin, even with a cosmetic bracket made of a brittle material such as ceramic sufficient strength can be obtained.

## Claims

1. An orthodontic bracket, comprising a base plate (1) and a pair of tie wings (2) provided along both sides of the base plate (1) and disposed so as to form an arch wire fitting slot (3) therebetween, wherein the tie wings (2) have wing pieces (5, 6) which project outwardly from the wings (2) with their distal ends slanting downwardly and can engage with a fixture (7) of the arch wire (4) in a cross-stitch-type manner, **characterized in that** the wing pieces (5, 6) of each tie wing (2) are constituted by a long wing piece (5) and a short wing piece (6), the long wing pieces (5) of the two tie wings (2) being arranged diagonally to the tie wings (2), and a recessed guide groove (5a) is provided at a portion of each tie wing (2) in the vicinity of the long wing piece (5) at the lateral end of said tie wing (2) for receiving the fixture (7).

## Patentansprüche

1. Kieferorthopädisches Bracket, das eine Basisplatte (1) und zwei Befestigungsflügel (2) umfasst, die entlang beider Seiten der Basisplatte (1) ausgebildet sind und derart angeordnet sind, dass zwischen diesen ein Bogendraht-Aufnahmeschlitz (3) gebildet ist, wobei die Befestigungsflügel (2) Flügelabschnitte (5, 6) aufweisen, die von den Flügeln (2) nach außen ragen, wobei deren distale Enden nach unten geneigt sind und mit einem Spannmittel (7) für den Bogendraht (4) in der Art eines Kreuzstichs in Eingriff gebracht werden können, **dadurch gekennzeichnet, dass** die Flügelabschnitte (5, 6) jedes Befestigungsflügels (2) durch einen langen Flügelabschnitt (5) und einen kurzen Flügelabschnitt (6) gebildet sind, wobei die langen Flügelabschnitte (5) der beiden Befestigungsflügel (2) diagonal zu den Befestigungsflügeln (2) angeordnet sind, und wobei in einem Abschnitt jedes Befestigungsflügels (2) in der Nähe des langen Flügelabschnitts (5) am seitlichen Ende des Befestigungsflügels (2) eine vertiefte Führungsrille (5a) zur Aufnahme des Spannmittels (7) ausgebildet ist.

## Revendications

1. Boîtier orthodontique, comprenant une plaque de base (1) et une paire d'ailes d'attache (2) disposées d'une manière telle à former entre elles une fente (3) de fixation d'un fil arqué, lesdites ailes d'attache (2) comprenant des pièces d'aile (5, 6) faisant saillie sur les ailes (2) vers l'extérieur et avec ses extrémités distales dirigées en oblique vers le bas et étant susceptibles d'engager avec un moyen de fixation (7) du fil arqué (4) à la manière d'un point de croix, **caractérisée en ce que** les pièces d'aile (5, 6) de chaque aile d'attache (2) sont constituées d'une pièce d'aile longue (5) et d'une pièce d'aile courte (6), lesdites pièces d'ailes longues (5) des deux ailes d'attache (2) étant disposées de manière diagonale par rapport aux ailes d'attache (2), et une rainure de guidage rétreinte (5a) étant prévue au niveau de chaque aile d'attache (2) au voisinage de la pièce d'aile longue (5) sur l'extrémité latérale de ladite aile d'attache (2), pour recevoir ledit moyen de fixation (7).
